# EUROPEAN PATENT SPECIFICATION

(11) **EP 4 052 945 B1**
(45) Date of publication and mention of the grant of the patent: **22.11.2023**
(21) Application number: 22159888.1
(22) Date of filing: 03.03.2022
(51) Int. Cl.: B60K 11/08, B60K 11/04

(54) **VEHICLE HAVING A PROTECTION FRAME UNDERNEATH A COOLING SYSTEM AND A FAN**
FAHRZEUG MIT EINEM SCHUTZRAHMEN UNTER EINEM KÜHLSYSTEM UND EINER GEBLÄSE
VÉHICULE AYANT UN CADRE DE PROTECTION SOUS UN SYSTÈME DE REFROIDISSEMENT ET UN VENTILATEUR

(30) Priority: 03.03.2021 NL 2027687
(43) Date of publication of application: 07.09.2022
(73) Proprietor: DAF Trucks N.V., 5643 TW Eindhoven (NL)
(72) Inventor: VAN DEN HEIJKANT, Rob Adrianus Johannes, 5643 TW Eindhoven (NL); RENTEMA, Date Willem Egbert, 5643 TW Eindhoven (NL); NEVELS, René Marie Peter Andreas, 5643 TW Eindhoven (NL)
(74) Representative: V.O.

(56) References cited:
- EP-A1- 0 649 978
- DE-A1- 2 850 579
- JP-A- H09 226 388
- US-A1- 2020 247 231

## Description

The invention relates to a vehicle comprising a vehicle cabin, an internal combustion engine and wheels for supporting the vehicle on a road surface, the vehicle cabin having a longitudinal vehicle center line extending in a usual direction of movement of the vehicle, a cabin height seen in a direction perpendicular to the road surface and a cabin width seen in a direction perpendicular to the longitudinal vehicle center line and perpendicular to the cabin height, the vehicle comprising a hood positioned at the front of the vehicle cabin when seen in the usual direction of movement of the vehicle, a cooling system and a fan positioned inside the underhood, the fan being positioned behind the cooling system when seen in the usual direction of movement of the vehicle and in front of the internal combustion engine, the fan having a fan rotation axis parallel to the vehicle center line, a fan front end positioned at a first distance from the hood and a fan rear end positioned at a second distance from the hood when seen in the usual direction of movement of the vehicle and having a fan width, the vehicle further comprising an air deflector positioned below the fan.

Such a vehicle is for example known from US2008035400A1. In this known vehicle the air deflector positioned below the fan is an airflow diverter including a splitting device. The splitting device comprises two pairs of two sidewalls extending from the air deflector upwards, which pairs of sidewalls divide the air deflector into first and second airflow diverter chutes. The airflow discharged from the fan which is discharged therefrom in a substantially vertical direction is redirected and divided by the first and second airflow diverter chutes into left and right paths which are directed to a substantially rearward, but divided, path underneath the vehicle and substantially parallel to the road surface. With underbody airflow substantially parallel to the ground, there is less likelihood that air discharged from the fan will hit the road surface and bounce up, kicking up dirt and debris from the ground and up into the underhood. In addition, by dividing the airflow by the first and second chutes, the airflow is directed away from an oil pan of the internal combustion engine, which helps to maintain cooler oil temperatures. The known airflow diverter thus provides an airflow distribution which reduces cooling component fouling and maintains overall vehicle cooling system efficiency. However, it has appeared that in some operating conditions of the internal combustion engine the airflow downstream of the airflow diverter is blocked by engine components downstream of the airflow diverter and consequently the amount of air flowing through the cooling system is thus reduced, thereby reducing the cooling efficiency.

The document DE2850579A1 shows also a vehicle comprising a vehicle cabin, an internal combustion engine and wheels for supporting the vehicle on a road surface, the vehicle cabin having a longitudinal vehicle center line extending in a usual direction of movement of the vehicle, a cabin height seen in a direction perpendicular to the road surface and a cabin width seen in a direction perpendicular to the longitudinal vehicle center line and perpendicular to the cabin height, the vehicle comprising a hood positioned at the front of the vehicle cabin when seen in the usual direction of movement of the vehicle, a cooling system and a fan positioned inside the underhood, the fan being positioned behind the cooling system when seen in the usual direction of movement of the vehicle and in front of the internal combustion engine, the fan having a fan rotation axis parallel to the vehicle center line, a fan front end positioned at a first distance from the hood and a fan rear end positioned at a second distance from the hood when seen in the usual direction of movement of the vehicle and having a fan width, the vehicle further comprising an air deflector positioned below the fan.

It is thus an object of the present invention to provide an alternative vehicle in which cooling component fouling is prevented while overall vehicle cooling system efficiency is maintained during substantially all vehicle operating conditions.

In order to achieve this object the invention provides a vehicle comprising a vehicle cabin, an internal combustion engine and wheels for supporting the vehicle on a road surface, the vehicle cabin having a longitudinal vehicle center line extending in a usual direction of movement of the vehicle, a cabin height seen in a direction perpendicular to the road surface and a cabin width seen in a direction perpendicular to the longitudinal vehicle center line and perpendicular to the cabin height, the vehicle comprising a hood positioned at the front of the vehicle cabin when seen in the usual direction of movement of the vehicle, a cooling system and a fan positioned inside the underhood, the fan being positioned behind the cooling system when seen in the usual direction of movement of the vehicle and in front of the internal combustion engine, the fan having a fan rotation axis parallel to the vehicle center line, a fan front end positioned at a first distance from the hood and a fan rear end positioned at a second distance from the hood when seen in the usual direction of movement of the vehicle and having a fan width, the vehicle further comprising an air deflector positioned below the fan, characterized in that the vehicle further comprises a protection frame underneath the cooling system and the fan, in that the air deflector being mounted to the protection frame and extending from the protection frame towards a free end of the air deflector, the free end of the air deflector being positioned at an air deflector free end distance from the hood which air deflector free end distance is larger than the second distance, the air deflector having an air deflector center line and an air deflector width, the air deflector width being defined by a first air deflector side and a second air deflector side, the air deflector width being smaller than the fan width, the air deflector center line being positioned offset with regard to the fan rotation axis in width direction of the vehicle cabin. By positioning the free end of the air deflector at an air deflector free end distance from the hood which air deflector free end distance is larger than the second distance, the air deflector thus extends further from the hood than the fan and thus can correctly redirect the vertical air flow discharged from the fan into a substantial horizontal direction. Since in addition the air deflector width is smaller than the fan width and since the air deflector center line is positioned offset with regard to the fan rotation axis in width direction of the vehicle cabin the air deflector is positioned asymmetrical with regard to the fan rotation axis. In this manner, the air deflector still provides a sufficient redirection of the vertical airflow discharged from the fan into a substantially horizontal airflow, which sufficiently prevents kicking up of dirt and debris from the road surface while on the other hand allowing a sufficient amount of airflow, in particular heated airflow, to be discharged from the underhood away from engine components.

In an embodiment of a vehicle according to the invention seen in a direction perpendicular to the road surface the first air deflector side is positioned below the fan rotation axis. In this manner the air deflector is only positioned at one side of the fan rotation axis, and thus does not give rise to blockage of airflow coming from the fan, thereby providing efficient cooling of the cooling system even during such operating conditions.

In a further embodiment of a vehicle according to the invention at the first air deflector side the free end of the air deflector is positioned closer to the protection frame than at the second air deflector side. In other words, the air deflector is smaller at the first air deflector side allowing more airflow to be discharged from the underhood at the side of the first air deflector side, thereby further increasing cooling efficiency of engine components.

In a still further embodiment of a vehicle according to the invention the air deflector has an upper surface directed to the fan, which upper surface is a smooth surface. By using a smooth upper surface, i.e. an upper surface free from ridges or upstanding sidewalls, the smooth upper surface of the air deflector does not provide any blockage of air discharged from the fan, which provides a better discharge of the airflow discharged from the fan resulting in a maintained cooling efficiency of engine components.

In another embodiment of a vehicle according to the invention the smooth upper surface of the air deflector is curved. By curving the smooth upper surface of the air deflector the airflow can be directed in a desired direction, for example away from engine components which otherwise would give rise to present blockage of the airflow discharged from the fan.

The invention will be further explained with reference to the Figures, in which non-limiting exemplary embodiments of a according to the invention are shown:
Figure 1 schematically in perspective shows an embodiment of a vehicle according to the invention without the air deflector;
Figure 2 schematically in perspective shows a part of the embodiment as shown in Figure 1 without the bottom plate;
Figure 3 schematically in perspective shows the cooling system and the fan and the protection frame of the vehicle as shown in Figures 1 and 2;
Figure 4 schematically in perspective shows a part of the embodiment of the vehicle as shown in Figure 1 with the bottom plate and the air deflector;
Figure 5 schematically in bottom view shows the embodiment of the vehicle as shown in Figure 4; and
Figure 6 schematically shows in top perspective view a part of the embodiment of the vehicle as shown in Figure 5.

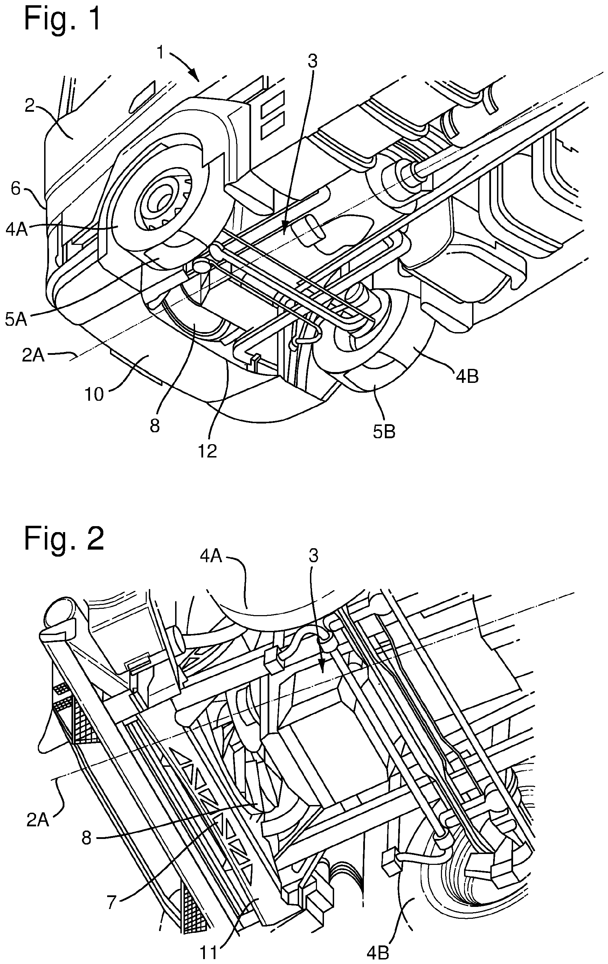

In Figure 1 an embodiment of a vehicle 1 according to the invention is schematically shown in perspective. The vehicle 1 comprises a vehicle cabin 2, an internal combustion engine 3 and wheels 4A, 4B for supporting the vehicle on a road surface 5 indicated by the flat surfaces 5A, 5B on which the wheels 4A, 4B are supported. The vehicle cabin 2 has a longitudinal vehicle center line 2A extending in a usual direction of movement of the vehicle 1. The vehicle cabin 2 has a cabin height seen in a direction perpendicular to the road surface 5A, 5B and a cabin width seen in a direction perpendicular to the longitudinal vehicle center line 2A and perpendicular to the cabin height.

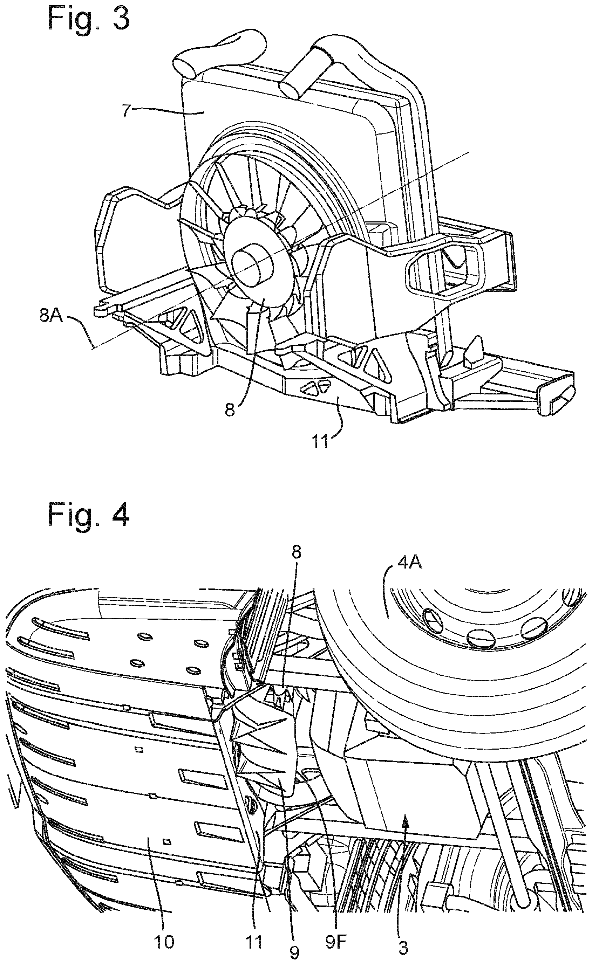

The vehicle 1 has a hood 6 positioned at the front of the vehicle cabin 2 when seen in the usual direction of movement of the vehicle 1. Inside the underhood, that is the space beneath and behind the hood 2, a cooling system 7 (see Figs. 2 and 3) and a fan 8 are positioned, the fan 8 being positioned behind the cooling system 7 when seen in the usual direction of movement of the vehicle 1. The fan 8 is positioned in front of the internal combustion engine 3 for cooling engine components.

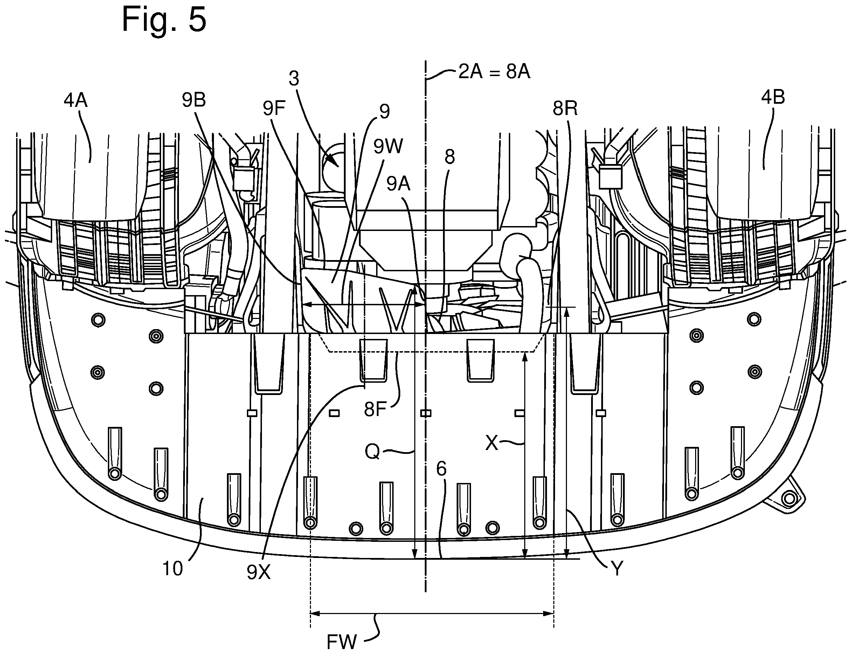

The fan 8 has a fan rotation axis 8A (see Fig. 3) which is parallel to the vehicle center line 2A, and has a fan width FW. A fan front end 8F (see Fig. 5) of the fan 8 is positioned at a first distance X from the hood 6 and a fan rear end 8R of the fan 8 is positioned at a second distance Y from the hood 6 when seen in the usual direction of movement of the vehicle 1 as seen in Figure 5.

The vehicle 1 further comprises an air deflector 9 positioned below the fan 8, which air deflector is visible in Figures 4, 5 and 6. In Figures 1 to 3 the air deflector 9 has been left out to more clearly show the other component of the inventive vehicle 1. In order to protect components of the vehicle 1 in the underhood, a protection frame 11 (see Figures 2, 3 and 4) is arranged underneath the cooling system 7 and the fan 8. In addition, in the embodiments shown in the Figures a bottom plate 10 is positioned at an underside of the underhood. It is however observed that the present invention also relates to vehicles without a bottom plate or vehicles having another shape or kind of bottom plate as shown in the Figures. The bottom plate 10 has been left out in Figure 2 to more clearly show the protection frame 11, while in Figure 3 only the cooling system 7, the fan and the protection frame 11 is shown to clearly their mutual positioning.

The air deflector 9 is in the shown embodiment mounted to the protection frame 11. The air deflector 9 extends from the protection frame 11 towards a free end 9F of the air deflector 9. The free end 9F of the air deflector 9 is positioned at an air deflector free end distance Q from the hood 6 which air deflector free end distance Q is larger than the second distance Y. By positioning the free end 9F of the air deflector 9 at distance from the hood which is larger than the second distance Y, the air deflector 9 thus extends further from the hood 6 than the fan 8 and thus can correctly redirect the vertical air flow discharged from the fan 8 into a substantial horizontal direction. It is observed here that the air deflector free end distance Q is measured from the point of the free end 9F which point is positioned closest to the hood 6.

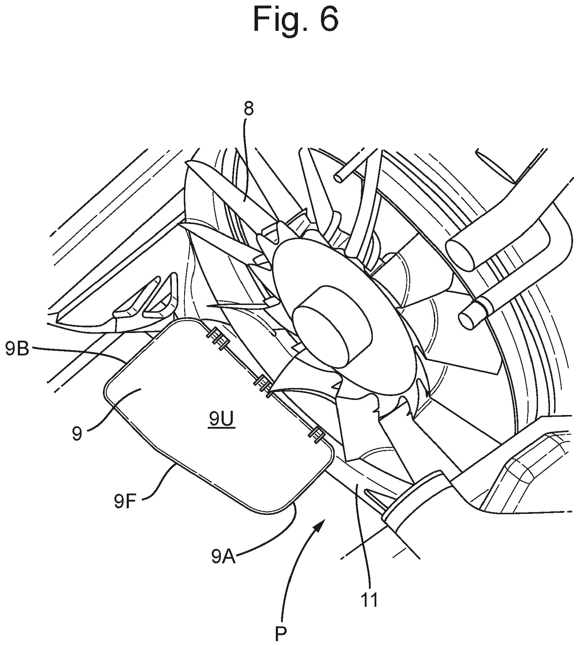

As indicated in Figure 5 the air deflector 9 has an air deflector center line 9X and an air deflector width 9W defined by a first air deflector side 9A and a second air deflector side 9B. The air deflector width 9W is smaller than the fan width FW, in the shown embodiment approximately the half of the fan width FW, while the air deflector center line 9X is positioned offset with regard to the fan rotation axis 8A in width direction of the vehicle cabin 2. This latter means that the air deflector 9 is positioned asymmetrical with regard to the fan 8. Since the air deflector 9 has a smaller width than the fan 8 and is positioned asymmetrical with regard to the fan 8 the air deflector 9 leaves a sufficiently large passage P (see Fig. 6) for allowing a sufficient amount of airflow, in particular heated airflow, to be discharged from the underhood away from engine.

As clearly can be seen in Figures 5 and 6 the first air deflector side 9A is in this embodiment positioned below the fan rotation axis 8A when seen in a direction perpendicular to the road surface, meaning that the air deflector 9 is only positioned at one side of the fan rotation axis 8A. The side at which the air deflector 9 is positioned with regard to the fan rotation axis 8A is dependent on the rotation direction of the fan 8. In the shown embodiment the air deflector 9 is positioned at the right side of the fan rotation axis 8A and the fan 8 rotates clockwise, as seen when standing in front of the vehicle 1 and looking towards the vehicle 1. In case the fan 8 rotates counter-clockwise the air deflector 9 is positioned at the left side of the fan rotation axis 8A, as seen when standing in front of the vehicle 1 and looking towards the vehicle 1.

In the embodiment shown in Figures 5 and 6 at the first air deflector side 9A the free end 9F of the air deflector 9 is positioned closer to the protection frame 11 than at the second air deflector side 9B. In this manner there is provided more room between the free end 9F of the air deflector 9 at the first air deflector side 9A and central engine components immediately behind the air deflector 9, such that air flow is allowed to pass between the free end 9F of the air deflector 9 at the first air deflector side 9A and the central engine components.

As visible in Figure 6 the air deflector 9 has an upper surface 9U directed to the fan 8, which upper surface 9U is a smooth surface free from ridges or upstanding sidewalls. In this manner the smooth upper surface 9U of the air deflector 9 does not provide any blockage of air discharged from the fan 8. In particular the smooth upper surface 9U of the air deflector 9 is curved to direct the airflow coming from the fan 8 in a desired direction.

## Claims

1. A vehicle (1) comprising a vehicle cabin (2), an internal combustion engine (3) and wheels (4A, 4B) for supporting the vehicle on a road surface, the vehicle cabin having a longitudinal vehicle center line (2A) extending in a usual direction of movement of the vehicle, a cabin height seen in a direction perpendicular to the road surface (5A, 5B) and a cabin width seen in a direction perpendicular to the longitudinal vehicle center line and perpendicular to the cabin height, the vehicle comprising a hood (6) positioned at the front of the vehicle cabin when seen in the usual direction of movement of the vehicle, a cooling system (7) and a fan (8) positioned inside the underhood, the fan being positioned behind the cooling system when seen in the usual direction of movement of the vehicle and in front of the internal combustion engine, the fan having a fan rotation axis (8A) parallel to the vehicle center line, a fan front end (8F) positioned at a first distance from the hood and a fan rear end (8R) positioned at a second distance from the hood when seen in the usual direction of movement of the vehicle and having a fan width (FW),
the vehicle further comprising an air deflector (9) positioned below the fan, **characterized in that** the vehicle further comprises a protection frame (11) underneath the cooling system and the fan, the air deflector being mounted to the protection frame and extending from the protection frame towards a free end (9F) of the air deflector, the free end of the air deflector being positioned at an air deflector free end distance (Q) from the hood which air deflector free end distance is larger than a second distance (Y), the air deflector having an air deflector center line (9X) and an air deflector width (9W), the air deflector width being defined by a first air deflector side (9A) and a second air deflector side (9B), the air deflector width being smaller than the fan width, the air deflector center line being positioned offset with regard to the fan rotation axis in width direction of the vehicle cabin.

2. A vehicle as claimed in claim 1, wherein seen in a direction perpendicular to the road surface the first air deflector side is positioned below the fan rotation axis.

3. A vehicle as claimed in claim 1 or claim 2, wherein at the first air deflector side the free end of the air deflector is positioned closer to the protection frame than at the second air deflector side.

4. A vehicle as claimed in any one of the claims 1 to 3, wherein the air deflector has an upper surface (9U) directed to the fan, which upper surface is a smooth surface.

5. A vehicle as claimed in claim 4, wherein the smooth upper surface of the air deflector is curved.

## Patentansprüche

1. Fahrzeug (1), umfassend einen Fahrzeuginnenraum (2), einen Verbrennungsmotor (3) und Räder (4A, 4B) zum Tragen des Fahrzeugs auf einer Straßenoberfläche, wobei der Fahrzeuginnenraum eine Fahrzeug-Längsmittellinie (2A), die sich in einer üblichen Bewegungsrichtung des Fahrzeugs erstreckt, eine Innenraumhöhe, betrachtet in einer Richtung senkrecht zur Straßenoberfläche (5A, 5B), und eine Innenraumbreite, betrachtet in einer Richtung senkrecht zur Fahrzeug-Längsmittellinie und senkrecht zur Innenraumhöhe, aufweist, wobei das Fahrzeug eine Motorhaube (6), die vor dem Fahrzeuginnenraum positioniert ist, wenn in der üblichen Bewegungsrichtung des Fahrzeugs betrachtet, ein Kühlsystem (7) und einen innerhalb des Motorraums positionierten Lüfter umfasst, wobei der Lüfter hinter dem Kühlsystem und vor dem Verbrennungsmotor (8A) positioniert ist, wenn in der üblichen Bewegungsrichtung des Fahrzeugs betrachtet, wobei der Lüfter eine Lüfterdrehachse (8A) parallel zur Fahrzeugmittellinie, ein Lüfter-Vorderende (8F), das in einem ersten Abstand von der Motorhaube positioniert ist, und ein Lüfter-Hinterende (8R), das in einem zweiten Abstand von der Motorhaube positioniert ist, wenn in der üblichen Bewegungsrichtung des Fahrzeugs betrachtet, aufweist und eine Lüfterbreite (FW) aufweist, wobei das Fahrzeug ferner ein Luftleitblech (9) umfasst, das unter dem Lüfter positioniert ist, **dadurch gekennzeichnet, dass** das Fahrzeug ferner einen Schutzrahmen (11) unterhalb des Kühlsystems und des Lüfters umfasst, das Luftleitblech am Schutzrahmen montiert ist und sich vom Schutzrahmen zu einem freien Ende (9F) des Luftleitblechs erstreckt, das freie Ende des Luftleitblechs in einem Abstand (Q) des freien Luftleitblechendes von der Motorhaube positioniert ist, wobei der Abstand des freien Luftleitblechendes größer als ein zweiter Abstand (Y) ist, das Luftleitblech eine Luftleitblech-Mittellinie (9X) und eine Luftleitblechbreite (9W) aufweist, die Luftleitblechbreite durch eine erste Luftleitblechseite (9A) und eine zweite Luftleitblechseite (9B) definiert ist, die Luftleitblechbreite kleiner als die Lüfterbreite ist, die Luftleitblech-Mittellinie in Bezug auf die Lüfterdrehachse in der Breitenrichtung des Fahrzeuginnenraums versetzt positioniert ist.

2. Fahrzeug nach Anspruch 1, wobei die erste Luftleitblechseite in einer Richtung senkrecht zur Straßenoberfläche betrachtet unter der Lüfterdrehachse positioniert ist.

3. Fahrzeug nach Anspruch 1 oder 2, wobei das freie Ende des Luftleitblechs auf der ersten Luftleitblechseite näher zum Schutzrahmen positioniert ist als auf der zweiten Luftleitblechseite.

4. Fahrzeug nach einem der Ansprüche 1 bis 3, wobei das Luftleitblech eine Oberseite (9U) aufweist, die zum Lüfter gerichtet ist, wobei die Oberseite eine glatte Oberfläche ist.

5. Fahrzeug nach Anspruch 4, wobei die glatte Oberseite des Luftleitblechs gekrümmt ist.

## Revendications

1. Véhicule (1) comprenant une cabine de véhicule (2), un moteur à combustion interne (3) et des roues (4A, 4B) pour supporter le véhicule sur une surface de route, la cabine de véhicule présentant une ligne centrale longitudinale de véhicule (2A) s'étendant dans une direction de déplacement habituelle du véhicule, une hauteur de cabine observée dans une direction perpendiculaire à la surface de route (5A, 5B) et une largeur de cabine observée dans une direction perpendiculaire à la ligne centrale longitudinale de véhicule et perpendiculaire à la hauteur de cabine, le véhicule comprenant un capot (6) positionné à l'avant de la cabine de véhicule lorsqu'observé dans la direction de déplacement habituelle du véhicule, un système de refroidissement (7) et un ventilateur (8) positionnés sous le capot, le ventilateur étant positionné derrière le système de refroidissement lorsqu'observé dans la direction de déplacement habituelle du véhicule et devant le moteur à combustion interne, le ventilateur présentant un axe de rotation de ventilateur (8A) parallèle à la ligne centrale du véhicule, une extrémité avant de ventilateur (8F) positionnée à une première distance du capot et une extrémité arrière de ventilateur (8R) positionnée à une seconde distance du capot lorsqu'observées dans la direction de déplacement habituelle du véhicule et présentant une largeur de ventilateur (FW),
le véhicule comprenant en outre un déflecteur d'air (9) positionné sous le ventilateur, **caractérisé en ce que** le véhicule comprend en outre un cadre de protection (11) sous le système de refroidissement et le ventilateur, le déflecteur d'air étant monté sur le cadre de protection et s'étendant du cadre de protection vers une extrémité libre (9F) du déflecteur d'air, l'extrémité libre du déflecteur d'air étant positionnée à une distance d'extrémité libre de déflecteur d'air (Q) par rapport au capot, laquelle distance d'extrémité libre de déflecteur d'air est supérieure à une seconde distance (Y), le déflecteur d'air présentant une ligne centrale de déflecteur d'air (9X) et une largeur de déflecteur d'air (9W), la largeur de déflecteur d'air étant définie par un premier côté de déflecteur d'air (9A) et un second côté de déflecteur d'air (9B), la largeur de déflecteur d'air étant inférieure à la largeur de ventilateur, la ligne centrale de déflecteur d'air étant positionnée décalée par rapport à l'axe de rotation de ventilateur dans une direction de largeur de la cabine de véhicule.

2. Véhicule selon la revendication 1, dans lequel, observé dans une direction perpendiculaire à la surface de route, le premier côté de déflecteur d'air est positionné en dessous de l'axe de rotation de ventilateur.

3. Véhicule selon la revendication 1 ou la revendication 2, dans lequel, au niveau du premier côté de déflecteur d'air, l'extrémité libre du déflecteur d'air est positionnée plus près du cadre de protection qu'au niveau du second côté de déflecteur d'air.

4. Véhicule selon l'une quelconque des revendications 1 à 3, dans lequel le déflecteur d'air présente une surface supérieure (9U) dirigée vers le ventilateur, laquelle surface supérieure est une surface lisse.

5. Véhicule selon la revendication 4, dans lequel la surface supérieure lisse du déflecteur d'air est incurvée.
